# EUROPEAN PATENT SPECIFICATION

(11) **EP 0 992 181 B1**
(45) Date of publication and mention of the grant of the patent: **27.09.2006**
(21) Application number: 98924354.8
(22) Date of filing: 08.06.1998
(51) Int. Cl.: H05F 1/02, H01B 1/12, C09D 5/24

(54) **METHOD FOR TREATMENT OF AN ARTICLE**
VERFAHREN ZUR BEHANDLUNG EINES GEGENSTANDES
PROCEDE DE TRAITEMENT D'UN ARTICLE

(30) Priority: 09.06.1997 FI 972450
(43) Date of publication of application: 12.04.2000
(73) Proprietor: Centaurea Oy, 60101 Seinäjoki (FI)
(72) Inventor: LUOMALA, Tuomas, O., FIN-60550 Nurmo (FI)
(74) Representative: Pursiainen, Timo Pekka
(86) International application number: PCT/FI1998/000486
(87) International publication number: WO 1998/057527

(56) References cited:
- EP-A- 0 690 457
- PATENT ABSTRACTS OF JAPAN; & JP,A,08 120 195 (TAKIRON CO LTD) 14 May 1996.

## Description

The present invention relates to a method, presented in the preamble of the appended claim 1, for making an article electroconductive, as well as to an antistatic article, such as an illuminator, presented in the preamble of the appended claim 9.

Explosive zones are divided, e.g. in the European standard EN 50014, into three different zone classes: 0, 1, 2. Class 0 (Zone 0) is the most demanding class of all, class 1 (Zone 1) is a slightly more moderate class, and class 2 (Zone 2) has further relaxed requirements. Slightly deviating from the European practice is the classification currently in use in the USA, where explosive zones are divided into two classes: Division 1 and Division 2. Division 1 corresponds basically to the classes 0 and 1 of the European standard EN 50014, and Division 2 corresponds to class 2.

In explosive zones, it is absolutely required to avoid sparkling induced by static electricity as well as to limit the quantity of energy to be conducted to the explosive zone, for example by limiting the voltage and power. Explosive zones include oil refineries, oil rigs, mines, and several chemical plants. These sites may have zones which differ in their explosive zone classification, e.g. zones to be classified in classes 1 and 2, and part of the zones can be unexplosive zones.

Also in explosive zones, it is common to use electric devices, such as process equipment, measuring instruments and illuminators, which need to be supplied with electric energy from the outside. Equipment to be placed in an explosive zone must fulfil the requirements set for equipment according to the explosive zone classification. More information on these special requirements can be found e.g. in said European standard EN 50014.

In addition to the requirement that the quantity of electric power supplied to an explosive zone should be limitable, also the controlled discharge of static electricity must be secured without sparkling. This can be achieved for example by making the device to be placed in an explosive zone at least partly electroconductive and by connecting it to the earth potential. Furthermore, the devices are also mechanically implemented to resist impacts and knocks, because e.g. breaking an illuminator may cause a situation that the illuminating element (lamp) inside the illuminator is broken and the resulting sparkling or heating effect causes a danger of explosion.

In prior art, illuminators intended for use under explosive conditions are implemented in a way that the illuminator has a frame part which is at least partly electroconductive, and the frame part is equipped with a protective cover which is at least partly transparent, a lamp being placed inside the protective cover. The protective cover is typically made of thick glass, whereby it resists impacts and dropping. A sufficiently thick protective cover of glass is relatively heavy, which increases the weight of the illuminator excessively. On the other hand, electroconductive plastics are non-transparent or their strength does not comply with the requirements for use under explosive conditions; consequently, the use of electroconductive plastic materials in protective covers for such illuminators is not possible with currently known solutions. Some conductive plastic composites (polymers) of this kind are disclosed e.g. in U.S. patent 5,219,492: polyacetylene, poly-p-phenylene, polypyrrole, polythiophen, and polyaniline. It is an aim to use such conductive polymers as electroconductors to replace e.g. metal conductors and semiconductors in many applications, such as batteries, photoelectric cells, circuit boards, antistatic package materials, and structures protecting from electromagnetic interference (EMI).

EP patent publication 545 729 discloses a method for bringing electroconductive polyaniline into an easily processable, melt-workable form by heat treatment with sulphonic acid or its derivative at a temperature of *ca*. 40...250 °C. However, the resulting melt-workable material has an acid pH value, which causes problems of corrosion in the equipment for manufacturing and processing the material.

This acidity problem is eliminated by using a substantially neutral, melt-workable electroconductive plastic material manufactured according to a method disclosed in EP application publication 582 919. Furthermore, EP application publication 627 745 presents a method for adjusting the acidity of doped polyaniline further with a neutralizing compound. FI application publication 940625 presents a simplified method for manufacturing an electroconductive, melt-workable polyaniline which has substantially neutral acidity and is electroconductively and thermally stable. Moreover, US patent 5,626,795 provides an extensive description of polyanilines and their properties.

For achieving a lighter structure in illuminators intended for use in normal conditions, it is possible to use as the protective cover e.g. a plastic which is at least partly transparent. The use of plastic has further the advantage that it can be moulded relatively easily, wherein it is possible to manufacture protective covers of different shapes and sizes. In illuminators, eye shields, etc., intended for use in explosive zones, special attention must be paid on the strength of the structure of the protective cover. Because of its poor electroconductivity, conventional plastic cannot be used as such, which increases the risk of static electric discharges. For making such plastics antistatic, attempts have been made to coat them with electroconductive substances, including said polyaniline, but the stability of the substances has not been sufficiently good for demanding use conditions. The coating may have become loose even by simply wiping or by scratching the coating lightly. Moreover, the corrosive effect of the coating on the plastics has prevented their use in the treatment of transparent plastic materials to become electroconductive.

JP-A-08 120 195 describes an antistatic coating formed on a thermoplastic resin film by treatment with a dispersion of powdery or granular polyaniline in a resin varnish prepared by dissolving a thermoplastic resin in a volatile solvent.

It is an aim of the present invention to provide an improved method for treatment of an article to become electroconductive as well as an antistatic article, such as an illuminator, manufactured by this method. The method according to the invention is characterized in what will be presented in the characterizing part of the appended claim 1. The invention is based on the idea that the article is subjected to surface treatment with a mixture containing polyaniline as a component, the article is evaporated for some time to dry the mixture, whereafter the article is subjected to retreatment with said mixture and evaporated again for drying the mixture. The article can also be heated. Furthermore, the article according to the present invention is characterized in what will be presented in the characterizing part of the appended claim 9.

The present invention gives significant advantages to the prior art. In particular, the method of the invention can be used to treat plastic articles to become electroconductive, whereby they can be used in explosive zones. This gives the advantage that e.g. the structure of illuminators can be made considerably lighter in weight than illuminators of prior art, particularly those designed for explosive zones. Furthermore, the illuminator of the invention has the advantage that, thanks to a slight discolouration caused by the mixture used in the treatment of the protective cover of the illuminator, possible damages can be detected and the protective cover be replaced with a new one. The protective cover can be easily changed e.g. in unexplosive service rooms, wherein the illuminator does not need to be sent to the manufacturer or distributor for repair.

In the following, the invention will be described in more detail with reference to the appended drawings, in which
- Fig. 1: is a schematic diagram showing a use site including a zone which is classified as explosive and a zone which is classified as unexplosive,
- Fig. 2: is a perspective view on an illuminator suitable for use in explosive zones, and
- Fig. 3: is a side view and a partial cross-section on an illuminator according to Fig. 2.

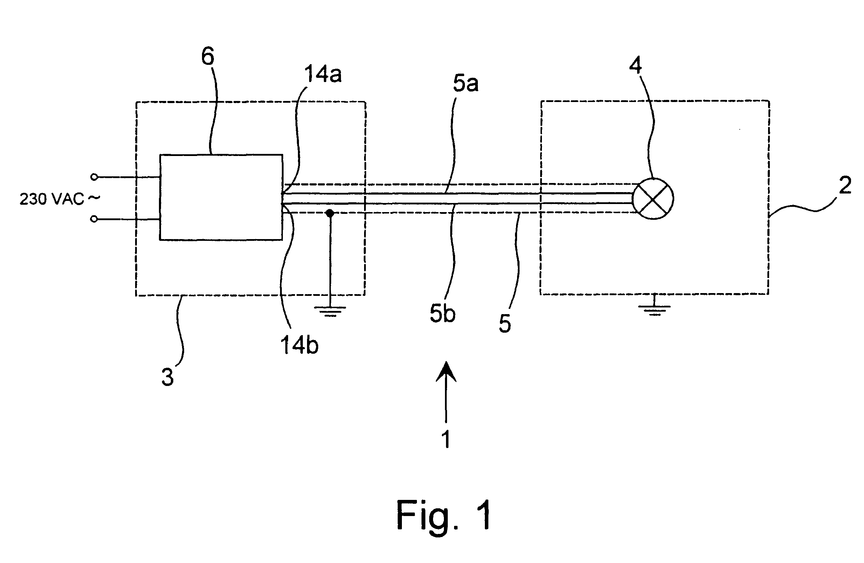

The arrangement of Fig. 1 shows a processing plant 1 with a process building 2 classified as explosive (e.g. class 1 in the standard EN 50014) as well as a service building 3 classified as unexplosive. The process building 2 is equipped e.g. with an illuminator 4. Electricity to the illuminator 4 is supplied via an input cable 5 from the service building 3. The service building 3 is equipped with a transformer 6 whereby e.g. the voltage of 230 V from the electric network is transformed to a low voltage of 48 V, and furthermore, the transformer 6 limits the strength of the current to be conducted to the input cable 5 so that the electric power in the input cable 5 does not exceed the limit set for the classification of the explosive zone. This upper limit for electric power depends e.g. on the zone class to which said process building 2 belongs. The illuminator 4 is connected via the input cable 5 to the ground potential, whereby any electric charge possibly accumulating in the frame of the illuminator 4 is discharged in a controlled manner to the ground.

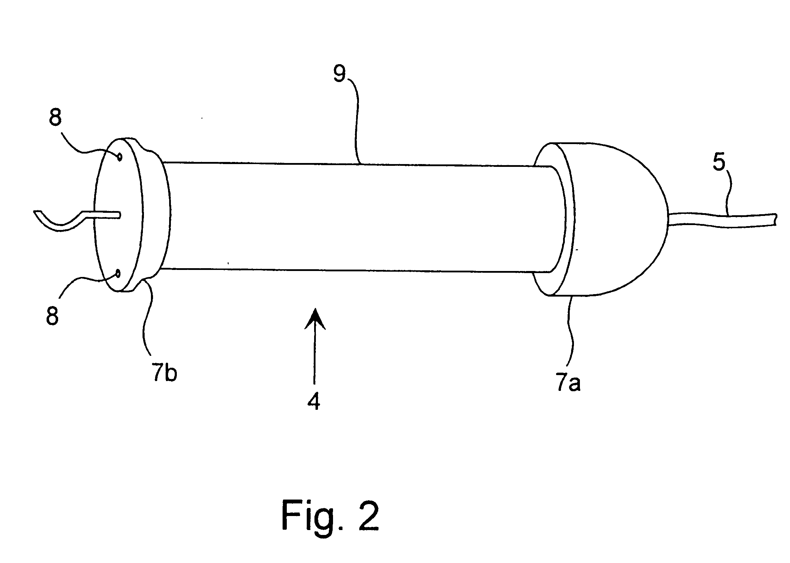

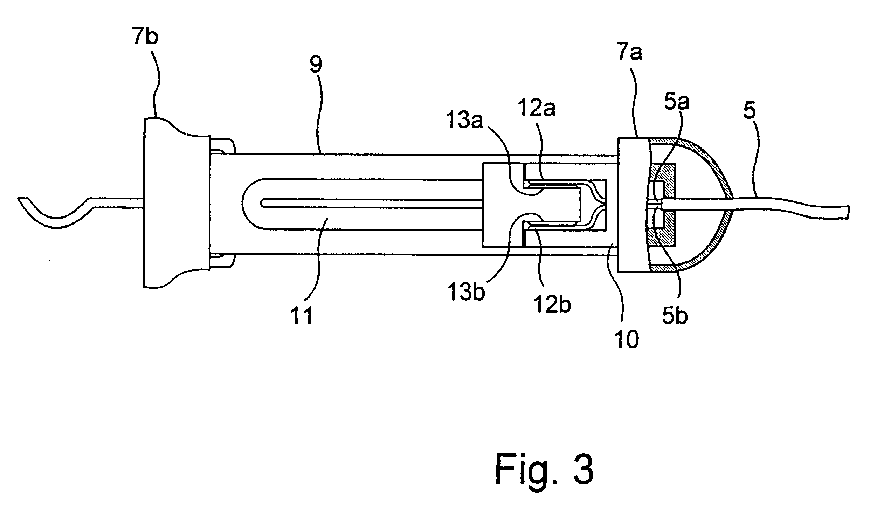

Figure 2 shows, in a perspective view, an antistatic illuminator 4 according to an advantageous embodiment of the invention. The illuminator consists of a frame part 7, which is preferably made of an electroconductive plastic by casting, injection moulding, or with a corresponding method. In this preferred embodiment of the invention, the frame part consists of two end parts: a first end part 7a and a second end part 7b. Between these end parts 7a, 7b, e.g. screws (Fig. 3) or other fixing means are used to fix a protective cover 9 which is made at least partly of transparent plastic, such as polycarbonate, and made electroconductive. The way of making the protective cover 9 electroconductive will be described below in this specification. The fixing of the protective cover 9 can also be implemented by gluing, but thus it is to be considered that the glue used in the fixing should not corrode the end parts 7a, 7b or the protective cover 9. Moreover, a glued protective cover 9 cannot be removed as easily as a protective cover 9 fixed with fixing means 8, which complicates the maintenance of such an illuminator. The protective cover 9 as well as the ends of the frame part are further provided with sealing means (not shown) to secure that the structure is dust- and/or water-proof. Furthermore, the first end part 7a is equipped with means 10 for fixing a lamp 11 in the illuminator 4, as well as means 12 for conducting electric energy via an input cable 5 to the lamp 11 (Fig. 3). For clarity, Fig. 2 does not illustrate the lamp 11, the lamp fixing means 10 and the means 12 for conducting electric energy, which are placed inside the protective cover.

Furthermore, Fig. 3 shows, in a reduced manner, a side view and a partial cross-section of an antistatic illuminator 4 according to a preferred embodiment of the invention, as shown in Fig. 2. The lamp 11 is advantageously a fluorescent lamp, e.g. because of its better efficiency and impact resistance in comparison with an incandescent lamp. As the lamp 11, it is also possible to use e.g. a Cooper-Hewitt lamp or a corresponding lamp type which is resistant to concussions.

The lamp 11 has a base part 11 a with electroconductive means, such as conductive strips 13a, 13b for supplying electricity to the lamp 11. In the first end part 7a of the illuminator 4, the means 12 for conducting electric energy comprise preferably counterparts 12a, 12b for the conductive strips, wherein when the lamp 11 is fixed to the lamp fixing means 10, the conductive strips 13a, 13b and the corresponding counterparts 12a, 12b constitute an electric connection. On the other hand, the counterparts 12a, 12b are coupled to conductors 5a, 5b of the input cable 5. The conductors 5a, 5b of the electric cable are coupled to output voltage pins 14a, 14b of a transformer 6 in an unexplosive zone, e.g. in a service building 3. When the lamp 11 used is a fluorescent lamp, the current supply circuit of the lamp must also be equipped with ignition means (not shown), such as a choker, for lighting the fluorescent lamp. The ignition means are placed *e*.*g*. in connection with the transformer 6, or they can be arranged inside the illuminator 4. A structure placed inside the illuminator 4 is presented in a parallel Finnish patent application by the same applicant, filed simultaneously with the present patent application.

### EXAMPLE

The following example is a description how a protective cover 9, preferably made of a polycarbonate tube, having a diameter of *ca*. 45 mm and a length of *ca*. 363 mm, is treated to become electroconductive. Polycarbonate is classified as an insulator, but its mechanical strength, light weight, formability, and transparency make polycarbonate very practicable in illuminators intended for explosive zones.

For treatment of the protective cover, a mixture is made of electroconductive polyaniline, a varnish, and a hardening agent. Powdered polyaniline is dissolved first in toluene, whereafter a varnish and a hardening agent are mixed into the solution. The electroconductivity of the treated protective cover 9 must be sufficient, in the order of 10⁻⁹ to 10⁻⁶ S (resistivity 10⁹ to 10⁶ Ω/m) or better. The transparency of the protective cover 9 must be sufficiently good for illuminator applications. Furthermore, the stability of the electroconductivity under demanding use conditions must be taken into account in the composition and treatment process of the mixture. In experiments made, the most suitable mixture ratio was found to be *ca*. 70 % of polyaniline solution, *ca*. 20 % of varnish and *ca*. 10 % of hardener. Experiments on the polyaniline content of the polyaniline solution showed an advantageous content to be 0.5 to 0.7 %, preferably *ca*. 0.6 % of polyaniline powder, the rest being toluene. Thus, polyaniline can be sufficiently well dissolved. With higher contents, granulation is found in the surface-treated protective cover 9: the more granulation, the higher the content of polyaniline in the solution. With small contents (0.5 % or less), the problem is that a sufficient level of electroconductivity cannot be achieved.

The protective cover 9 is subjected to surface treatment with said mixture, wherein toluene used in the solution of polyaniline starts to corrode the surface of the protective cover. The first surface treatment is followed by an evaporation stage, wherein the varnish starts to harden. However, the hardening of the varnish will slow down the corrosion, wherein the mechanical properties of the protective cover 9 cannot be impaired to a significant degree. In any case, a mixture containing polyaniline has adhered to the protective cover 9, whereby sufficiently good electroconductivity (antistatic property) is achieved in the protective cover 9. The duration of the first evaporation stage is advantageously in the order of 10 to 20 min, preferably *ca*. 15 min.

The protective cover is surface treated with the mixture still a second time, followed by a second evaporation stage, whose duration is advantageously in the order of 8 to 12 min, preferably *ca*. 10 min. This second treatment improves the stability of the electroconductivity also under very demanding use conditions.

After the second evaporation stage, the protective cover 9 may still contain residual toluene which might cause corrosion of the protective cover; consequently, the protective cover 9 can still be subjected to thermal treatment, whereby toluene residues can be eliminated to a sufficient degree. In the thermal treatment, the temperature is raised to for example *ca*. 80°C, and the duration of the treatment is for example *ca*. one hour. With regard to the temperature, one should be careful not to exceed the melting point of the material used in the protective cover 9. The duration of the treatment is not a critical factor; a longer treatment time secures the removal of toluene.

The significance of the hardener in the above-presented mixture involves e.g. a significant acceleration in the hardening of the mixture, wherein the structure of the protective cover 9 cannot be impaired (bristle) during evaporation. The hardener used can be a hardening agent known as such.

A protective cover treated by the above-presented method was used to manufacture an illuminator 4, in which the lamp used was a fluorescent lamp of 11 W. The illuminator was placed in a climate chamber, where the temperature was set at *ca*. 90°C and the relative humidity was in the order of 85 %. The illuminator 4 was maintained under these conditions for 720 hours, after which tests were carried out for the electroconductivity and for the resistance to impacts with a so-called shot test. After the tests, it could be stated that the electroconductivity of the illuminator had remained substantially unaltered. Also the shot test did not impair the properties of the illuminator, but the transparency of the protective cover 9 was sufficient and no changes were found due to embrittlement.

It is obvious that the invention is not limited solely to the embodiments presented above, but it can be modified within the scope of the appended claims. The polyaniline can be a known polyaniline polymer with internal electroconductivity. The term polyaniline covers also derivatives having the polymeric stem specific to polyaniline. As the solvent of polyaniline, toluene can be replaced by also other organic solvents.

The article to be treated can be also different from a protective cover for an illuminator. Examples include antistatic packages, where in addition to the antistatic property, also transparency is needed at least partially, e.g. for perceiving the contents of the package without opening the package. Moreover, transparency and the antistatic property are required also in different eye shields in certain work tasks. Such work tasks include e.g. the handling of chemicals in explosive zones and the handling of electronic components vulnerable to static electric discharges which is usually conducted in unexplosive zones. Transparent shields are also used in connection with some machine tools to protect a worker who must, however, have a visual contact to the machining operation. For example for the above-mentioned purposes, the present method for treatment of transparent plastic articles to become electroconductive is well suited, because the plasticity and light weight of plastic is better compared to e.g. glass, which is used in shields of prior art.

## Claims

1. A method for treatment of an article (9) to become electroconductive, wherein the treatment is made with a mixture containing electroconductive polyaniline in a solution a varnish and a hardening agent, and that the method comprises at least the following stages:
- a treatment stage in which the article (9) is treated with said mixture, and
- an evaporating stage for hardening the mixture at least partly.

2. A method for treatment of an article (9) to become electroconductive, wherein the treatment is made with a mixture containing electroconductive polyaniline in a solution, a varnish and a hardening agent, and that the method comprises at least the following stages:
- a first treatment stage in which the article (9) is treated with said mixture,
- a first evaporating stage for hardening the mixture at least partly,
- a second treatment stage in which the article (9) is treated with said mixture, and
- a second evaporating stage for hardening the mixture at least partly.

3. A method according to claim 1 or 2, **characterized in that** the mixture contains 65 to 75 %, preferably *ca*. 70 % of polyaniline in a solution, varnish 15 to 25 %, preferably *ca*. 20 %, and a hardening agent 5 to 15 %, preferably *ca*. 10 %.

4. A method according to claim 3, **characterized in that** the polyaniline solution contains electroconductive polyaniline 0.5 to 0.7 %, preferably *ca*. 0.6 %, and toluene 99.5 to 99.3 %, preferably *ca*. 99.4 %.

5. A method according to claim 2, 3 or 4, **characterized in that**
- at the first evaporation stage, the evaporation time is advantageously 10 to 20 min, preferably *ca*. 15 min, and
- at the second evaporation stage, the evaporation time is advantageously 8 to 12 min, preferably *ca*. 10 min.

6. A method according to any of the claims 1 to 5, **characterized in that** the method comprises further a stage of heating the article (9), at which the article is heated at a temperature of *ca*. 80°C, and the duration of the heating stage is 30 to 90 min, advantageously 50 to 70 min, preferably *ca*. 60 min.

7. A method according to any of the claims 1 to 6, **characterized in that** the article (9) to be treated is of plastic, such as polycarbonate.

8. A method according to any of the claims 1 to 7, **characterized in that** the article (9) to be treated is used as a protective cover particularly in illuminators (4) intended for use in explosive zones.

9. An article, such as an illuminator (4) particularly for explosive zones, the article being obtainable by the method of claim 1 and comprising an at least partly transparent protective cover (9), which protective cover (9) was treated to be come electroconductive with a mixture containing at least electroconductive polyaniline in a solution, the varnish, and the hardening agent.

10. An article (4) according to claim 9, **characterized in that** the protective cover is of plastic, such as polycarbonate.

11. An article (4) according to claim 9 or 10, **characterized in that** the mixture contains *ca*. 70 % polyaniline in a solution, *ca*. 20 % varnish, and *ca*. 10 % hardening agent.

12. An article (4) according to any of the claims 9 to 11, **characterized by**
- the protective cover (9) being treated at least twice with said mixture, and
- the mixture being dried after the first and the second treatment.

13. An article (4) according to any of the claims 9 to 12, **characterized**
**in that** it is particularly an illuminator (4) intended for use in explosive zones, which comprises further at least a frame part (7), a lamp (11), means (10) for fixing the lamp to the frame part, and means (8) for fixing the protective cover to the frame part.

## Patentansprüche

1. Verfahren zur Behandlung eines Gegenstands (9), damit dieser elektrisch leitfähig wird, wobei die Behandlung mit einem Gemisch erfolgt, das elektrisch leitfähiges Polyanilin in einer Lösung, einen Lack und einen Härter enthält, und das Verfahren wenigstens die folgenden Stufen umfasst:
- eine Behandlungsstufe, in welcher der Gegenstand (9) mit dem Gemisch behandelt wird, und
- eine Verdampfungsstufe zur wenigstens teilweisen Aushärtung des Gemisches.

2. Verfahren zur Behandlung eines Gegenstands (9), damit dieser elektrisch leitfähig wird, wobei die Behandlung mit einem Gemisch erfolgt, das elektrisch leitfähiges Polyanilin in einer Lösung, einen Lack und einen Härter enthält, und das Verfahren wenigstens die folgenden Stufen umfasst:
- eine erste Behandlungsstufe, in welcher der Gegenstand (9) mit dem Gemisch behandelt wird,
- eine erste Verdampfungsstufe zur wenigstens teilweisen Aushärtung des Gemisches,
- eine zweite Behandlungsstufe, in welcher der Gegenstand (9) mit dem Gemisch behandelt wird,
- eine zweite Verdampfungsstufe zur wenigstens teilweisen Aushärtung des Gemisches.

3. Verfahren nach Anspruch 1 oder 2, **dadurch gekennzeichnet, dass** das Gemisch 65 bis 75%, vorzugsweise etwa 70% Polyanilin in einer Lösung, 15 bis 25%, vorzugsweise etwa 20% Lack und 5 bis 15%, vorzugsweise etwa 10% Härter enthält.

4. Verfahren nach Anspruch 3, **dadurch gekennzeichnet, dass** die Polyanilinlösung 0,5 bis 0,7%, vorzugsweise etwa 0,6% elektrisch leitfähiges Polyanilin und 99,5 bis 99,3%, vorzugsweise etwa 99,4% Toluen enthält.

5. Verfahren nach Anspruch 2, 3 oder 4, **dadurch gekennzeichnet, dass**
- bei der ersten Verdampfungsstufe die Verdampfungszeit vorteilhafterweise 10 bis 20 min., vorzugsweise etwa 15 min. beträgt und
- bei der zweiten Verdampfungsstufe die Verdampfungszeit vorteilhafterweise 8 bis 12 min., vorzugsweise etwa 10 min. beträgt.

6. Verfahren nach einem der Ansprüche 1 bis 5, **dadurch gekennzeichnet, dass** das Verfahren ferner eine Stufe der Erwärmung des Gegenstands (9) umfasst, bei welcher der Gegenstand auf eine Temperatur von etwa 80°C erwärmt wird, und die Dauer der Erwärmungsstufe 30 bis 90 min., vorteilhafterweise 50 bis 70 min., vorzugsweise etwa 60 min. beträgt.

7. Verfahren nach einem der Ansprüche 1 bis 6, **dadurch gekennzeichnet, dass** der zu behandelnde Gegenstand (9) aus Kunststoff wie z.B. Polycarbonat ist.

8. Verfahren nach einem der Ansprüche 1 bis 7, **dadurch gekennzeichnet, dass** der zu behandelnde Gegenstand (9) als Schutzabdeckung insbesondere bei Leuchten (4), die für den Gebrauch in explosionsgefährdeten Bereichen bestimmt sind, verwendet wird.

9. Artikel wie eine Leuchte (4), insbesondere für explosionsgefährdete Bereiche, wobei der Artikel durch das Verfahren von Anspruch 1 erhältlich ist und eine wenigstens teilweise transparente Schutzabdeckung (9) umfasst, welche Schutzabdeckung (9) mit einem Gemisch, das wenigstens elektrisch leitfähiges Polyanilin in einer Lösung, den Lack und den Härter enthält, behandelt wurde, um elektrisch leitfähig zu werden.

10. Artikel (4) nach Anspruch 9, **dadurch gekennzeichnet, dass** die Schutzabdeckung aus Kunststoff wie z.B. Polycarbonat ist.

11. Artikel (4) nach Anspruch 9 oder 10, **dadurch gekennzeichnet, dass** das Gemisch etwa 70% Polyanilin in einer Lösung, etwa 20% Lack und etwa 10% Härter enthält.

12. Artikel (4) nach einem der Ansprüche 9 bis 11, **gekennzeichnet durch**:
- die Schutzhülle (9), die wenigstens zweimal mit dem Gemisch behandelt worden ist, und
- das Gemisch, das nach der ersten und der zweiten Behandlung getrocknet worden ist.

13. Artikel (4) nach einem der Ansprüche 9 bis 12, **dadurch gekennzeichnet, dass** er insbesondere eine Leuchte (4) ist, die für den Gebrauch in explosionsgefährdeten Bereichen bestimmt ist und ferner wenigstens einen Rahmenteil (7), einen Leuchtkörper (11), Mittel zur Befestigung des Leuchtkörpers an dem Rahmenteil und Mittel (8) zur Befestigung der Schutzabdeckung an dem Rahmenteil umfasst.

## Revendications

1. Procédé de traitement d'un article (9) afin qu'il devienne électroconducteur, dans lequel le traitement est effectué avec un mélange contenant une poly(aniline) électroconductrice dans une solution, un vernis et un agent de durcissement, ledit procédé comprenant au moins les étapes suivantes :
- une étape de traitement dans laquelle l'article (9) est traité avec ledit mélange, et
- une étape d'évaporation destinée à durcir le mélange au moins partiellement.

2. Procédé de traitement d'un article (9) afin qu'il devienne électroconducteur, dans lequel le traitement est effectué avec un mélange contenant une poly(aniline) électroconductrice dans une solution, un vernis et un agent de durcissement, ledit procédé comprenant au moins les étapes suivantes :
- une première étape de traitement dans laquelle l'article (9) est traité avec ledit mélange,
- une première étape d'évaporation destinée à durcir le mélange au moins partiellement,
- une seconde étape de traitement dans laquelle l'article (9) est traité avec ledit mélange, et
- une seconde étape d'évaporation destinée à durcir le mélange au moins partiellement.

3. Procédé selon la revendication 1 ou 2, **caractérisé en ce que** le mélange contient 65 à 75 %, de préférence environ 70 % de poly(aniline) dans une solution, 15 à 25 % de vernis, et de préférence environ 20 %, et 5 à 15 %, de préférence environ 10 % d'agent de durcissement.

4. Procédé selon la revendication 3, **caractérisé en ce que** la solution de poly(aniline) contient 0,5 à 0,7 %, de préférence environ 0,6 % de poly(aniline) électroconductrice, et 99,5 à 99,3 %, de préférence environ 99,4 % de toluène.

5. Procédé selon la revendication 2, 3 ou 4, **caractérisé en ce que** :
- dans la première étape d'évaporation, la durée d'évaporation est, de manière avantageuse, de 10 à 20 minutes, de préférence d'environ 15 minutes, et
- dans la seconde étape d'évaporation, la durée d'évaporation est, de manière avantageuse, de 8 à 12 minutes, de préférence d'environ 10 minutes.

6. Procédé selon l'une quelconque des revendications 1 à 5, **caractérisé en ce que** ledit procédé comprend, en outre, une étape consistant à chauffer l'article (9), pendant laquelle l'article est chauffé à une température d'environ 80 °C, et la durée de l'étape de chauffage est de 30 à 90 min, de manière avantageuse de 50 à 70 min, de préférence d'environ 60 min.

7. Procédé selon l'une quelconque des revendications 1 à 6, **caractérisé en ce que** l'article (9) à traiter est constitué de matière plastique, tel que du poly(carbonate).

8. Procédé selon l'une quelconque des revendications 1 à 7, **caractérisé en ce que** l'article (9) à traiter est utilisé comme couvercle protecteur, particulièrement dans des illuminateurs (4) prévus pour une utilisation dans des zones explosives.

9. Article tel qu'un illuminateur (4) destiné particulièrement à des zones explosives, ledit article pouvant être obtenu par le procédé selon la revendication 1 et comprenant un couvercle protecteur au moins partiellement transparent (9), ledit couvercle protecteur (9) ayant été traité pour être électroconducteur avec un mélange contenant au moins de la poly(aniline) électroconductrice dans une solution, le vernis et l'agent de durcissement.

10. Article (4) selon la revendication 9, **caractérisé en ce que** le couvercle protecteur est constitué de matière plastique, tel que du poly(carbonate).

11. Article (4) selon la revendication 9 ou 10, **caractérisé en ce que** le mélange contient environ 70 % de poly(aniline) dans une solution, environ 20 % de vernis et environ 10 % d'agent de durcissement.

12. Article (4) selon l'une quelconque des revendications 9 à 11, **caractérisé en ce que**
- le couvercle protecteur (9) est traité au moins deux fois avec le même mélange, et
- le mélange est séché après le premier et le second traitement.

13. Article (4) selon l'une quelconque des revendications 9 à 12, **caractérisé en ce qu'**il s'agit particulièrement d'un illuminateur (4) prévu pour une utilisation dans des zones exposées, comprenant, en outre, au moins une partie de cadre (7), une lampe (11), un moyen (10) de fixation de la lampe à la partie de cadre, et un moyen (8) de fixation du couvercle protecteur à la partie de cadre.
